# EUROPÄISCHE PATENTSCHRIFT

(11) **EP 0 872 132 B1**
(45) Veröffentlichungstag und Bekanntmachung des Hinweises auf die Patenterteilung: **14.03.2001**
(21) Anmeldenummer: 96945761.3
(22) Anmeldetag: 02.12.1996
(51) Int. Cl.: H04Q 7/22, H04Q 7/38

(54) **VERFAHREN UND FUNKSTATION ZUM ÜBERTRAGEN VON INFORMATIONEN ÜBER EIN GSM-MOBILFUNKNETZ**
METHOD AND RADIO STATION FOR THE TRANSMISSION OF DATA BY WAY OF A GSM MOBILE RADIO NETWORK
PROCEDE ET STATION RADIO POUR TRANSMETTRE DES DONNEES PAR L'INTERMEDIAIRE D'UN RESEAU RADIO MOBILE DE TYPE GSM

(30) Priorität: 28.12.1995 DE 19549009
(43) Veröffentlichungstag der Anmeldung: 21.10.1998
(73) Patentinhaber: SIEMENS AKTIENGESELLSCHAFT, 80333 München (DE)
(72) Erfinder: THOMA, Sebastian, D-82024 München (DE)
(86) Internationale Anmeldenummer: DE9602312
(87) Internationale Veröffentlichungsnummer: WO9724891

(56) Entgegenhaltungen:
- EP-A- 0 642 283
- IEEE INTERNATIONAL SYMPOSIUM ON PERSONAL, INDOOR AND MOBILE RADIO COMMUNICATIONS, Bd. 1, 27.September 1995, Seiten 372-377, XP002020137 HAEMAELAEINEN J ET AL: "PROPOSED OPERATION OF GSM PACKET RADIO NETWORKS"

## Beschreibung

Die Erfindung betrifft ein Verfahren bzw. eine Funkstation zum Übertragen von Informationen über ein GSM-Mobilfunknetz, bei dem für eine Verkehrsbeziehung zwischen einer Mobilstation und einem weiteren Kommunikationsendgerät über eine Luftschnittstelle zwischen der Mobilstation und einer Basisstation ein Kontext festgelegt wird.

GSM-Mobilfunknetze wurden entwickelt, um Sprachinformationen auch zu mobilen Kommunikationsendgeräten zu übertragen. Das GSM-Mobilfunknetz ist z.B. aus der Druckschrift "Das zukünftige paneuropäische digitale Mobilfunksystem", Teil 1 bis 3, H. Ochsner, Bulletin SEV/VSE (ASE/UCS), 79 (1988), vom 4. Juni, 6. August bzw. 5. November, bekannt. Die Mobilität von Kommunikationsendgeräten wird dadurch erreicht, daß Informationen über eine Luftschnittstelle zwischen einer Mobilstation, die das eine an der Verkehrsbeziehung beteiligte Kommunikationsendgerät darstellt und einer Basisstation, die den Netzzugang realisiert, übertragen werden. Im Funkbereich einer Basisstation sind die Mobilstationen ständig erreichbar. Darüber hinaus ist es bekannt, Verkehrsbeziehungen zwischen den Funkbereichen verschiedener Basisstationen zu übergeben. Diese GSM-Mobilfunknetze können als globale flächendeckende Netze ausgebildet werden. Für die Luftschnittstelle zwischen der Mobilstation und der Basisstation muß für jede Verkehrsbeziehung ein Kontext festgelegt werden. Dieser Kontext umfaßt z.B. Angaben über die zu wählende Codierung, die Verwürfelung, die Verschlüsselung, die Authentizität der Mobilstation und des weiteren Kommunikationsendgerätes, zu dem zu wählenden Dienst und eventuell weiteren Parametern.

Diese Kontextfestlegung für eine Verkehrsbeziehung findet dabei während des Verbindungsaufbaus für diese Verkehrsbeziehung statt. Sie muß daher für jede Verkehrsbeziehung erneut durchgeführt werden. Für die Übertragung von Sprache ist die Zeitdauer für die Kontextfestlegung für jede Verkehrsbeziehung im Rahmen des Aufbaus dieser Verkehrsbeziehung nicht kritisch, da die aufgewendete Zeit zur Kontextfestlegung im Vergleich zur Zeitdauer der Sprachinformationsübertragung gering ist. Die Inanspruchnahme von funktechnischen Ressourcen der Luftschnittstelle für die Kontextfestlegung ist somit bei Sprachverbindungen nicht weiter relevant.

Aus der europäischen Patentschrift EP 0 332 818 A2 ist es weiterhin bekannt, ein Mobilfunknetz für die Datenübertragung anzupassen. Dazu müssen die Mobilstationen zur Datenerfassung, Speicherung und Übertragung geeignet sein und das Mobilfunksystem in der Lage sein, nach einer entsprechenden Signalisierung sowohl Verkehrsbeziehungen für Sprachinformationen als auch Verkehrsbeziehungen für die Datenübertragung zu vermitteln. Die Datenübertragung erfolgt dabei paketorientiert, d.h. es existiert kein quasi kontinuierlicher Informationsfluß wie bei der Sprachübertragung, sondern es werden nur sporadisch einzelne Datenpakete übertragen. Das Verhältnis zwischen den bereitgestellten funktechnischen Ressourcen der Luftschnittstelle und den tatsächlich genutzten funktechnischen Ressourcen für die Übermittlung von paketierten Daten ist ungünstig; diese Art der Ausgestaltung eines Mobilfunksystems läßt keine wirtschaftliche Ausnutzung der funktechnischen Ressourcen zu.

Hinsichtlich der Verbindungssteuerung besteht die Möglichkeit, für jedes Datenpaket oder jede Gruppe von Datenpaketen eine eigenständige Verkehrsbeziehung aufzubauen und nach Übertragung dieser paketierten Daten wieder abzubauen. Dadurch werden funktechnische Ressourcen während der Pausenzeiten nicht belegt und sind für weitere Verkehrsbeziehungen nutzbar. Dabei zeigt sich jedoch, daß die Zeitdauer für die Festlegung des Kontexts der Verkehrsbeziehung gegenüber der Zeitdauer für die Informationsübertragung einen größeren Stellenwert gewinnt. Dies bedeutet, daß die Kontextfestlegung im Vergleich zur Datenübertragung einen großen Teil der funktechnischen Ressourcen bindet.

Es ist weiterhin allgemein aus der Fernmeldetechnik bekannt, bei Vorliegen einer Anforderung zu einer Verkehrsbeziehung eine logische Verkehrsbeziehung aufzubauen, die die vermittlungstechnischen Ressourcen nicht ständig bindet, und nur kurzzeitig während der tatsächlichen Übertragung der Nutzinformationen eine physikalische Verkehrsbeziehung herstellt. Zumindest ein Teil der Festlegung des Verkehrsbeziehungskontexts geschieht dabei bei dem Aufbau der logischen Verkehrsbeziehung. Zwischen der Festlegung des Kontexts der Verkehrsbeziehung nach einer Verbindungsanforderung und dem Einrichten dieser Verkehrsbeziehung besteht jedoch ein fester zeitlicher Zusammenhang, der dazu führt, daß zwischen der Anforderung dieser Verkehrsbeziehung und dem Beginn der ersten Informationsübertragung eine zeitliche Verzögerung besteht. Zum Zeitpunkt der Anforderung der Verkehrsbeziehung kann dabei auch eine Verknappung der funktechnischen Ressourcen der Luftschnittstelle auftreten, wodurch die Einrichtung der Verkehrsbeziehung weiter verzögert oder gar unmöglich wird.

Aus EP 0 642 283 A1 ist bekannt, daß vor der Übertragung von Paketdaten in einem physikalischen Kanal eines Mobilfunknetzes ein virtueller Kanal aufgebaut wird, so daß der anschließende Aufbau des physikalischen Kanals beschleunigt wird.

Der Erfindung liegt die Aufgabe zugrunde, die funktechnischen Ressourcen für die Übertragung von Informationen über eine Luftschnittstelle zwischen Mobilstationen und Basisstationen in GSM-Mobilfunknetzen effizienter zu nutzen. Diese Aufgabe wird durch das Verfahren nach dem Patentanspruch 1 und die Funkstation nach Patentanspruch 14 ausgehend von den Merkmalen des Oberbegriffs durch die Merkmale des kennzeichnenden Teils gelöst.

Die funktechnischen Ressourcen werden dadurch effizienter genutzt, daß der Aufbau der Verkehrsbeziehung beschleunigt wird, indem der Kontext dieser Verkehrsbeziehung bereits vorher unabhängig vom Zeitpunkt des nachfolgenden Aufbaus der physikalischen Verkehrsbeziehung geschieht. Die Entkopplung von Kontextfestlegung und Aufbau der physikalischen Verkehrsbeziehung ermöglicht es, die funktechnischen Ressourcen dann anzufordern, wenn sie ausreichend verfügbar sind oder wenn bereits andere Verkehrsbeziehungen bestehen, über die die Kontextfestlegung schnell abgewickelt werden kann. Der Kontext der Verkehrsbeziehung umfaßt dabei vorteilhafterweise zumindest eine der folgenden Angaben zur Authentizität, Verschlüsselung, Kodierung und/oder Dienstefestlegung. Dies ermöglicht, je nach Anforderung, die Festlegung von zumindest Teilen des Kontexts der Verkehrsbeziehung bereits vor dem Aufbau der physikalischen Verkehrsbeziehung vorzunehmen.

Je nach Dienst, und evt. vor dessen Auswahl durch die Mobilstation bzw. das weitere Kommunikationsendgerät, kann damit auf aufwendige Signalisierungsmeldungen im Rahmen des Aufbaus der Verkehrsbeziehung zumindest teilweise verzichtet werden. Als besonders vorteilhaft erweist sich das erfindungsgemäße Verfahren, wenn die zu übertragenden Informationen paketierte Daten repräsentieren. Im Falle der paketorientierten Datenübertragung können somit die funktechnischen Ressourcen besonders effizient und wirtschaftlich genutzt werden.

Die Kontextfestlegung bezüglich der Kodierung legt beispielsweise die Kanalkodierung zwischen Basisstation und Mobilstation fest. Die Basisstation bietet beispielsweise über einen Rundrufkanal (im GSM-Mobilfunksystem der BCCH) die möglichen Kanalkodierungen an, unter denen die Mobilstation eine Auswahl treffen kann. Im Zusammenhang mit einer zu wählenden Datenrate, diese schränkt die möglichen Dienste ein, erfolgt die netzseitige entsprechende Ressorcenzuteilung durch eine Zuweisung eines oder mehrerer Kanäle mit der ausgewählten Kanalkodierung. Durch die erfindungsgemäße unabhänige Kontextfestlegung kann die Informationsübertragung ständig den individuellen Erfordernissen angepaßt werden.

Sind mehrere Dienste für die Mobilstation zugelassen, kann auch innerhalb der Kontextfestlegung eine Priorisierung innerhalb der Dienste vorgenommen werden. Anhand dieser Prioritäten, und gegebenenfalls einer Priorisierung innerhalb der Mobilstationen, kann bei mehreren gleichzeitig vorliegenden Diensten eine entsprechende Auswahl getroffen werden.

Zu den möglichen Diensten zählen Facsimile-Nachrichten, Internet-mail oder Dateitranfer. Der generelle Zugriff auf diese Dienste wird teilnehmerindividuell im Netz (beispielsweise im Heimatregister (HLR) des GSM-Mobilfunknetzes, einen speziellen Register eines Datenübertragungsnetzes oder in der Mobilstation) gespeichert. Diese Einträge können vom Netzbetreiber geändert werden. Auch hierbei gibt die unabhängige Kontextfestlegung einen breiten Gestaltungsspielraum sowohl für den Netzbetreiber, der die möglichen Dienste festlegen kann, als auch für die Mobilstation, also den Teilnehmer, der innerhalb der Dieste eine entsprechende Auswahl treffen kann.

Der Kontext der Verkehrsbeziehung für die Luftschnittstelle kann dabei durch einen gesonderten Signalisierungsmeldungsaustausch zwischen Mobilstation und weiterem Kommunikationsendgerät bzw. Basisstation festgelegt werden, oder dieser Verkehrsbeziehungskontext wird durch andere Mittel fest vorgegeben. Dadurch entsteht ein weiterer Freiheitsgrad bei der Verringerung der Inanspruchnahme funktechnischer Ressourcen, jedoch unter Verzicht auf eine höhere Flexibilität bei der Kontextfestlegung für jede Verkehrsbeziehung. Viele Verkehrsbeziehungen zwischen Kommunikationspartners gestatten jedoch eine einmalige Festlegung oder zumindest eine stark eingeschränkte Fexibilität des Verkehrsbeziehungskontexts. Dies ist z.B. der Fall für Anwendungen, wie Point of Sales, ferngesteuerte Telemetrie und weitere, bei denen ein Verkehrsbeziehungskontext stets wenige gleiche, vorgebbare Parameter enthält.

Um den beschleunigten Aufbau der Verkehrsbeziehung zu ermöglichen, wird vorteilhafterweise sofort nach einer Verkehrsbeziehungsanforderungsmeldung ein individueller Kanal durch die Basisstation zugewiesen. Ein solcher individueller Kanal kann ein schneller begleitender Kontrollkanal (FACCH) oder ein Nutzdatenkanal (TCH) sein.

Der Kontext der Verkehrsbeziehung sieht vorteilhafterweise folgende permanent gespeicherteten Einträge für die Mobilstation vor: eine Paketdatenadresse zusätzlich zur GSMeigenen Adresse, eine Adresse des Übergangs in ein Datennetzwerk (z.B. Gateway zum Internet), ein Profil zum Umfang der Teilnehmer mit denen eine Verkehrsbeziehung aufgebaut werden kann (z.B. keine Rufe ins Ausland) und eine Adresse eines Funkbereiches zum Rufen der Mobilstation, die unabhängig von der GSM-eigenen Rufadresse ist (routing area).

Die Festlegung des Verkehrsbeziehungskontexts kann z.B. eine logische Verkehrsbeziehung begründen, die unabhängig vom Zeitpunkt der Übertragung von paketierten Daten und evt. unabhängig von einer Verkehrsbeziehungsanforderung eingerichtet wird. Innerhalb der logischen Verkehrsbeziehung werden dann nur zeitweise physikalische Verkehrsbeziehungen aufgebaut (über die Luftschnittstelle durchgeschaltet), in denen funktechnische Ressourcen zur Paketdatenübertragung in Anspruch genommmen werden. Es ist jedoch alternativ möglich, während einer vorhergehenden physikalischen Verkehrsbeziehung zur Datenübertragung den Kontext zumindest teilweise für die nachfolgende physikalische Verkehrsbeziehung festzulegen. Damit läßt sich eine Anpassung an wechselnde Bedingungen der Verkehrsbeziehung ermöglichen oder auch das unbefugte Abhören der Verkehrsbeziehung erschweren.

Besonders vorteilhaft wirkt das erfindungsgemäße Verfahren, wenn beim physikalischen Durchschalten einer Verkehrsbeziehung innerhalb einer logischen Verkehrsbeziehung keine weitere Kontextfestlegung vor dem Bereitstellen eines individuellen Kanals erfolgt. Der gesamte Verkehrsbeziehungskontext wird also innerhalb der logischen Verkehrsbeziehung bestimmt, so daß beim physikalischen Durchschalten der Verkehrsbeziehung, d.h. bei einer physikalischen Verkehrsbeziehung nur die Verkehrsbeziehungsanforderung und eine Kanalzuweisung erfolgen muß. Ebenso kann die Festlegung des Kontext der Verkehrsbeziehung von logischer Verkehrsbeziehung zu logischer Verkehrsbeziehung vorgenommen werden. Damit ergibt sich abhängig vom gewünschten Dienst eine Vielfalt von Gestaltungsmöglichkeiten, die die effektive Ausnutzung der funktechnischen Ressourcen der Luftschnittstelle ermöglicht.

Die funktechnischen Ressourcen werden auch dadurch effizienter genutzt, indem sie nicht unnötig blockiert werden. Mitunter ist die Inanspruchnahme von funktechnischen Ressourcen innerhalb einer physikalischen Verkehrsbeziehung nicht vorhersehbar, deshalb ist es vorteilhaft, nach dem Senden eines Datenpaketes einen voreinstellbaren Zeitschalter rückzusetzen und zu aktivieren, so daß nach dessen Ablauf die physikalische Verkehrsbeziehung automatisch abgebaut wird, d.h. der Kontekt der Verkehrsbeziehung wird rückgesetzt.

Werden z.B. 5 s keine Paketdaten übertragen, so wird eine physikalische Verkehrsbeziehung durch Aberkennen der funktechnischen Ressourcen wieder abgebaut. Auf die gleiche Weise kann ebenso eine logische Verkehrsbeziehung abgebaut werden. Durch diese Maßnahmen, wird ein Blockieren von Ressourcen und ein Signalisierungsaufwand zur Aufrechterhaltung einer logischen Verkehrsbeziehung verringert. Das Einstellen des Zeitschalters bzw. der Zeitschalter erfolgt vorteilhafterweise netzseitig, wobei ein Zeitschalter sowohl auf der Netzseite, als auch in der Mobilstation vorzusehen ist. Durch ein entsprechendes Einstellen der Zeitschalter ist es möglich, eine Mobilstation zu veranlassen eine physikalische Verkehrsbeziehung aufzugeben oder völlig von der Paketdatenübertragung zurückzutreten und damit auch die logische Verkehrsbeziehung aufzugeben.

Entsprechend der aktuellen Übertragungsbedingungen oder zur Reorganisation der Ressourcen kann eine Änderung der Kontexts, durch eine Änderung der Priorisierung oder der Anzahl der Kanäle während des Bestehens einer logischen Verkehrsbeziehung erfolgen. Die Prioritäten und die Datenrate sind vorteilhafterweise von physikalischer zu physikalischer Verkehrsbeziehung änderbar, da damit je nach Anzahl der zu versorgenden Mobilstationen und je nach Übertragungsbedingungen eine verbesserte Nutzung der funktechsnischen Ressourcen eingeleitet wird. Insbesondere ist bei Mischformen von Mobilstationen, die für Datendienste und Sprachdienste ausgestaltet sind, eine Priorisierung zwischen Daten und Sprache vorzunehmen.

Um die Bestimmung der Vorhaltzeit (Timing Advance) ebenfalls vom Aufbau der physikalischen Verkehrsbeziehung abzukoppeln, wird diese in periodischen Abständen bestimmt und in der Mobilstation gespeichert. Auch dadurch kann der Aufbau einer physikalischen Verkehrsbeziehung beschleunigt werden und die Inanspruchnahme von funktechnischen Ressourcen auf Zeitspannen mit unter Umständen geringeren Belastungen der Luftschnittstelle verlagert werden.

Der Verkehrsbeziehungskontext kann sowohl zwischen Mobilstation und Basisstation als auch zwischen Mobilstation und weiterem Kommunikationsendgerät festgelegt werden. Der Verkehrsbeziehungskontext kann dabei eine Priorisierung für die Zuweisung von funktechnischen Ressourcen der Luftschnittstelle für die nachfolgende Informationsübertragung vorsehen. Damit ist z.B. die priorisierte Übertragung von Paketdaten gegenüber Sprachdaten möglich.

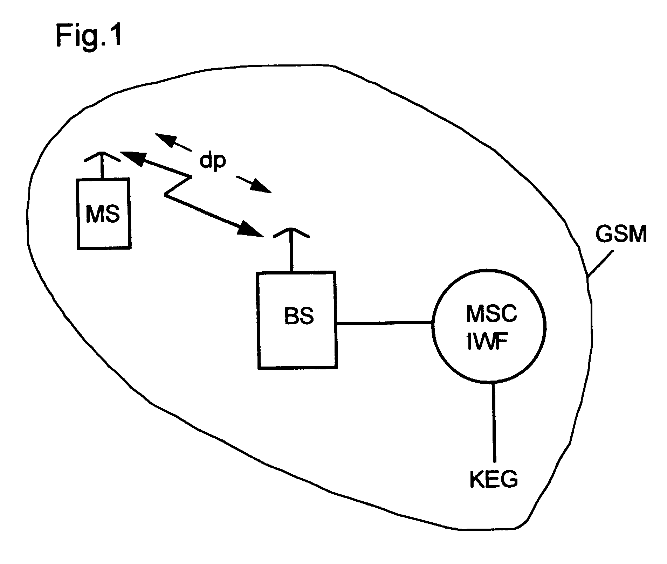

Im folgenden soll das erfindungsgemäße Verfahren anhand von zeichnerischen Darstellungen näher erläutert werden. Dabei zeigen
- FIG 1: eine schematische Darstellung eines GSM-Mobilfunknetzes,
- FIG 2: mehrere Möglichkeiten für die Festlegung des Verkehrsbeziehungskontexts in Bezug auf die Übertragung von paketierten Daten,
- FIG 3: den Signalisierungsmeldungsaustausch zur Kontextfestlegung und zum Aufbau einer physikalischen Verkehrsbeziehung nach dem Stand der Technik,
- FIG 4: einen beschleunigten Aufbau einer Verkehrsbeziehung und
- FIG 5: einen Abbau einer Verkehrsbeziehung.

Ein GSM-Mobilfunknetz GSM enthält z.B. eine Basisstation BS, in deren Funkbereich sich beispielhaft eine Mobilstation MS befindet. Zwischen der Basisstation BS und der Mobilstation MS können über eine Luftschnittstelle Informationen übertragen werden. Die Basisstation BS stellt die Verbindung zu weiteren Einrichtungen des GSM-Mobilfunknetzes GSM her. Diese weiteren Einrichtungen sind z.B. ein Mobilstations-Controller MSC und eine Einheit zur Realisierung von Interworking-Funktionen. Dabei kann das GSM-Mobilfunknetz GSM mit weiteren Kommunikationsnetzen verbunden sein. Beispielhaft ist ein weiteres Kommunikationsendgerät KEG mit dem GSM-Mobilfunknetz verbindbar oder ist selbst Bestandteil dieses GSM-Mobilfunknetzes GSM.

Das GSM-Mobilfunknetz GSM soll zur Übertragung von paketierten Daten dp parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen.

Die funktechnischen Ressourcen der Luftschnittstelle sind begrenzt und sind zudem starken Auslastungsschwankungen unterworfen. Das kann dazu führen, daß ein Aufbau einer Verkehrsbeziehung unmöglich ist, da keine weiteren funktechnischen Ressourcen für den Moment der Anforderung der Verkehrsbeziehung vorhanden sind oder daß dieser Aufbau der Verkehrsbeziehung sich verzögert. Währenddessen liegt zu anderen Zeitpunkten eine wesentlich geringere Auslastung der funktechnischen Ressourcen vor, so daß die nicht unmittelbar für den Verkehrsbeziehungsaufbau nötige Festlegung des Verkehrsbeziehungskontexts während dieser Zeitspannen getroffen werden kann.

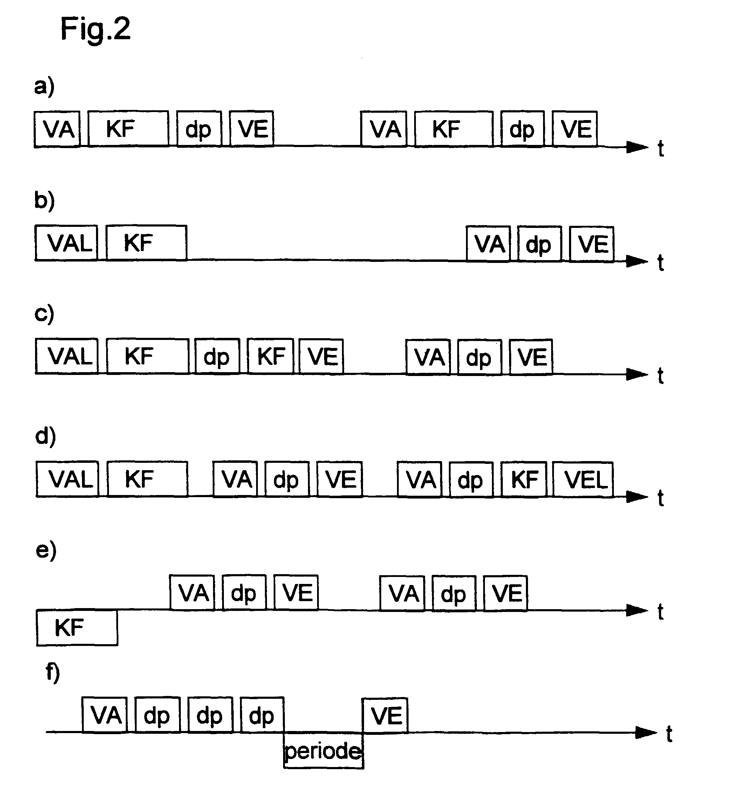

In FIG 2 sind verschiedene Möglichkeiten der Festlegung des Verkehrsbeziehungskontexts dargestellt. Dabei zeigt FIG 2a eine bekannte Vorgehensweise, nach der in einem ersten Signalisierungsmeldungsaustausch ein Aufbau VA einer physikalischen Verkehrsbeziehung stattfindet, worauf die Festlegung des Kontexts KF der nachfolgenden Informationsübertragung stattfindet, wobei während der Informationsübertragung paketierte Daten dp ausgetauscht werden, und die physikalische Verkehrsbeziehung in einem Verkehrsbeziehungsabbau VE abgebaut wird. Dieser Vorgang wiederholt sich bei jeder Verkehrsbeziehung. Entsprechend den Festlegungen des GSM-Mobilfunksystems, das nach einem kombinierten Zeitlagenmultiplex- und Frequenzmultiplexverfahren arbeitet, sind die in FIG 2 dargestellten Abläufe auf diskrete Zeitlagen verteilt und stellen keinen kontinuierlichen Ablauf dar.

In FIG 2b wird erfindungsgemäß zuerst eine logische Verkehrsbeziehung aufgebaut VAL, worauf die Festlegung KF des Verkehrsbeziehungskontexts stattfindet. Diese Einrichtung einer logischen Verkehrsbeziehung geschieht völlig unabhängig vom Zeitpunkt der späteren Informationsübertragung zu einem Zeitpunkt geringer Auslastung der funktechnischen Ressourcen. Die physikalischen Verkehrsbeziehungen können daraufhin zu beliebigen Zeitpunkten durch einen Verkehrsbeziehungsaufbau VA die spätere Übertragung von paketierten Daten dp und einen Abbau VE dieser physikalischen Verkehrsbeziehung realisiert werden.

In FIG 2c ist die Möglichkeit dargestellt, daß die Kontextfestlegung vor dem Abbau VE einer physikalischen Verkehrsbeziehung für die nachfolgende physikalische Verkehrsbeziehung stattfindet. Hierbei kann eine etablierte Verkehrsbeziehung ausgenützt werden, um ohne größeren zusätzlichen Signalisierungsaufwand die zur Kontextfestlegung nötigen Informationen auszutauschen. Damit ist es konkret möglich, für die folgende physikalische Verkehrsbeziehung sofort einen individuellen Kanal durch die Basisstation BS zuzuweisen. Es sind also keine weiteren oder zumindest nur stark eingeschränkte Kontextfestlegungen für diese nachfolgende physikalische Verkehrsbeziehung nötig.

FIG 2d nimmt Bezug auf FIG 2b, es wird also wiederum eine logische Verkehrsbeziehung aufgebaut VAL und in nachfolgenden physikalischen Verkehrsbeziehungen paketierte Daten dp übertragen, jedoch wird vor Auflösung VEL dieser logischen Verkehrsbeziehung eine weitere Kontextfestlegung KF für die nächstfolgende logische Verkehrsbeziehung vorgenommen. Für die nachfolgende logische Verkehrsbeziehung wäre dann keine weitere Kontextfestlegung oder nur eine eingeschränkte Kontextfestlegung nötig.

Es ist, wie in FIG 2e dargestellt, auch möglich, daß der Verkehrsbeziehungskontext einmal fest definiert KF wurde, d.h. ohne Signalisierungsmeldungsaustausch erfolgt und z.B. herangezogen wird, wenn eine Verbindung zwischen zwei definierten Kommunikationsendgeräten MS, KEG aufgebaut werden soll. Es wäre damit möglich, weitere physikalische Verkehrsbeziehungen zwischen diesen beiden Kommunikationsendgeräten MS, KEG ohne Festlegung KF des Verkehrsbeziehungskontexts oder nur mit Teilen dieser Festlegung durchzuführen.

FIG 2f verdeutlicht den Fall, daß eine physikalische Verkehrsbeziehung nach ihrem Aufbau VA und der Übertragung von Datenpaketen dp automatisch abgebaut VE wird, wenn eine durch einen voreinstellbaren Zeitschalter festgelegte Periode (periode) nach dem letzten Senden eines Datenpaketes dp vergangen ist. Damit werden bei längeren Übertragungspausen, die mitunter nicht vorhersehbar sind, nicht unnötig funktechnische Ressourcen in Anspruch genommen.

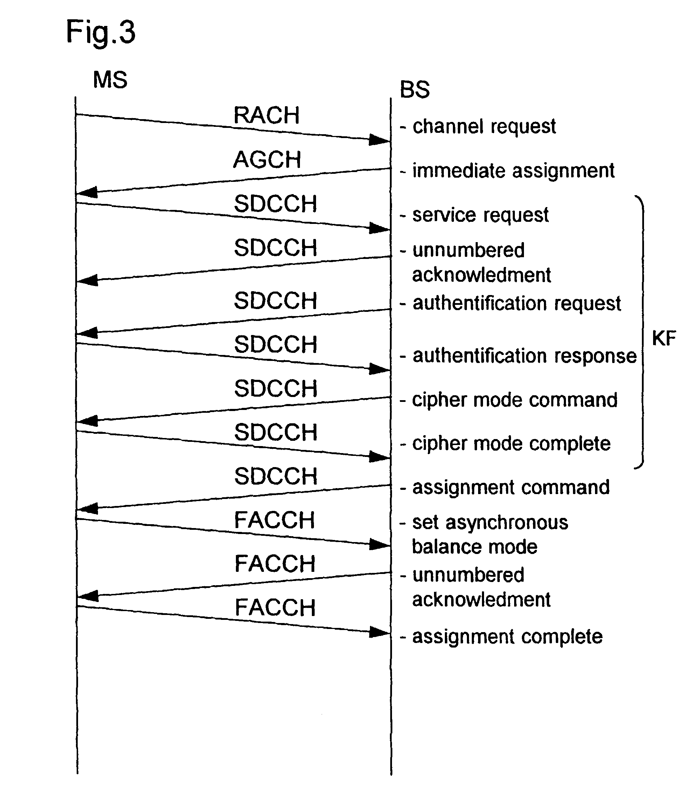

FIG 3 zeigt den Signalisierungsmeldungsaustausch zwischen einer Mobilstation MS und einer Basisstation BS für den Aufbau einer Verkehrsbeziehung nach einer dementsprechenden Anforderung. Entsprechend dem Stand der Technik findet anschließend die Festlegung KF des Verkehrsbeziehungskontexts statt. Im GSM-Mobilfunknetz GSM findet nach einer Verkehrsbeziehungsanforderungsmeldung (channel request) durch die Mobilstation MS auf einem Random Access Channel (RACH) die Zuweisung eines Kanals (immediate assignment) auf einem Access Grand Channel (AGCH) durch die Basisstation BS statt. Daraufhin fordert die Mobilstation MS einen Dienst an (service request) und nutzt dabei den zugewiesenen Stand-Alone Dedicated Control Channel (SDCCH). Dies bestätigt die Basisstation BS (unnumbered acknowledgement).

Weiterhin fordert die Basisstation BS eine Authentizitätsprüfung (authentification request), worauf die Mobilstation MS entsprechend (authentification response) antwortet. Auf die gleiche Weise wird die Verschlüsselungsfestlegung durch eine Anforderung (cipher mode command) durch die Basisstation BS und eine Antwort (cipher mode complete) durch die Mobilstation MS durchgeführt. Es können jedoch noch weitere Signalisierungsmeldungen innerhalb dieser Kontextfestlegung stattfinden. Daraufhin weist die Basisstation BS einen individuellen Kanal (assignment command) der Verkehrsbeziehung über die Luftschnittstelle zu. Durch eine Festlegung des Übertragungsmodus (set asychronous balanced mode (SABM)) durch die Mobilstation MS und eine weitere Bestätigung (unnumbered acknowledgement (UA)) durch die Basisstation BS wird das Protokoll für den angeforderten Service innerhalb der Verkehrsbeziehung festgelegt. Die Mobilstation MS kann nach Abschluß der Verkehrsbeziehungskontextfestlegung mit einer Signalisierungsmeldung (assignment complete) den Vollzug des Verkehrsbeziehungsaufbaus melden.

Durch die Tatsache, daß GSM-Mobilfunksystem-gemäß für die Festlegung des Verkehrsbeziehungskontexts ein langsamer Stand-Alone Dedicated Control Channel (SDCCH) genutzt wird und nur für die Dienstefestlegung ein schneller begleitender Kontrollkanal (Fast Associated Control Channel FACCH) genutzt werden kann, dauert die Kontextfestlegung relativ lange. Diese Kontextfestlegung könnte jedoch bereits vor der Verkehrsbeziehung in Zeiten geringer Inanspruchnahme von funktechnischen Ressourcen und auf schnellen Kanälen oder innerhalb vorangehender Verkehrsbeziehungen festgelegt werden.

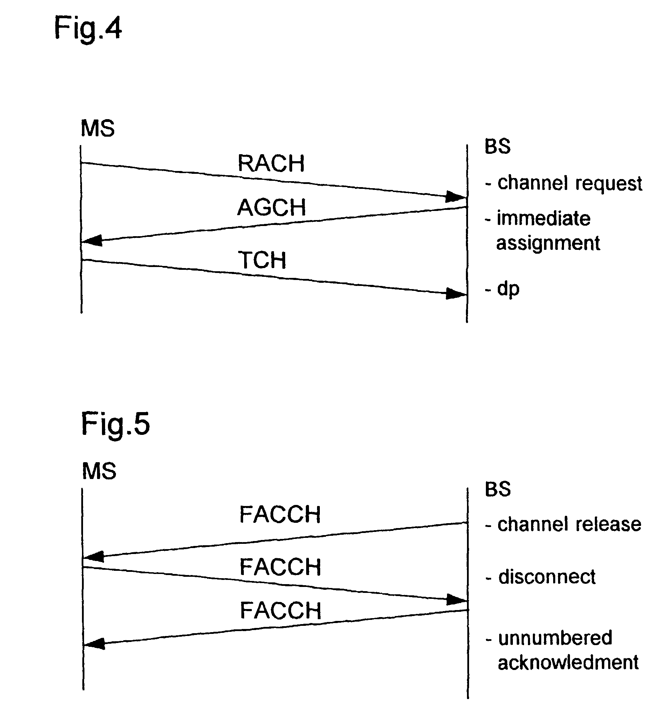

Nach FIG 4 wäre dann lediglich eine Verkehrsbeziehungsanforderungsmeldung (channel request) durch die Mobilstation MS und eine Kanalzuweisung (immediate assignment) durch die Basisstation BS nötig, um sofort mit der Übertragung der paketierten Daten dp zu beginnen oder zumindest sofort mit der Dienstefestlegung zu beginnen.

Der Abbau einer Verkehrsbeziehung ohne Kontextfestlegung für die nachfolgende Verkehrsbeziehung geschieht beispielsweise dadurch, daß gemäß FIG 5 die Basisstation BS eine Freigabemeldung (channel release) auf einem schnellen begleitenden Kontrollkanal (FACCH) der Mobilstation MS übermittelt, worauf diese eine Freigabemeldung (disconnect (DISC)) absetzt und die Basisstation BS die Verkehrsbeziehung auflöst und dies der Mobilstation MS durch ein Bestätigungsmeldung (unnumbered acknowledgement (UA)) signalisiert.

## Patentansprüche

1. Verfahren zum Übertragen von Informationen über ein GSM-Mobilfunknetz (GSM), wobei die übertragenen Informationen paketierte Daten (dp) repräsentieren,
bei dem für eine Verkehrsbeziehung zwischen einer Mobilstation (MS) und einem weiteren Kommunikationsendgerät (KEG) über eine Luftschnittstelle zwischen der Mobilstation (MS) und einer Basisstation (BS) ein Kontext vor einem Aufbau der Verkehrsbeziehung festgelegt wird,
**dadurch gekennzeichnet,**
daß im Sinne eines beschleunigten Aufbaus der Verkehrsbeziehung die Festlegung von zumindest Teilen dieses Kontexts zwischen der Mobilstation (MS) und der Basisstation (BS) unabhängig vom Zeitpunkt des Aufbaus der Verkehrsbeziehung vor einem Abbau einer vorangehenden physikalischen Verkehrsbeziehung erfolgt.

2. Verfahren nach Anspruch 1,
bei dem die Teile des Verkehrsbeziehungskontexts zumindest eine der Angaben zur Authentizität, Verschlüsselung, Kodierung und/oder Dienstfestlegung umfassen.

3. Verfahren nach einem der Ansprüche 1 oder 2,
bei dem der Kontext der Verkehrsbeziehung durch einen Signalisierungsmeldungsaustausch festgelegt wird.

4. Verfahren nach einem der Ansprüche 1 bis 3,
bei dem nach einer Verkehrsbeziehungs-Anforderungsmeldung (channel request) durch die Basisstation (BS) sofort ein individueller Kanal (TCH, FACCH) der Luftschnittstelle zugewiesen wird.

5. Verfahren nach Anspruch 4,
bei dem der individuelle Kanal als schneller begleitender Kontrollkanal (FACCH) oder als Nutzdatenkanal (TCH) ausgeprägt ist.

6. Verfahren nach einem der vorgehenden Ansprüche,
bei dem für die Datenübertragung zwischen der Mobilstation (MS) und der Basisstation (BS) eine den Kontext der Verkehrsbeziehung festlegende logische Verkehrsbeziehung aufgebaut wird, wobei innerhalb der logischen Verkehrsbeziehung nur zeitweise physikalische Verkehrsbeziehungen unter Nutzung von funkrechnischen Ressourcen aufgebaut werden.

7. Verfahren nach einem der Ansprüche 1 bis 6,
bei dem zumindest Teile der Kontextfestlegung über den Abbau einer logischen Verkehrsbeziehung hinweg gespeichert werden.

8. Verfahren nach einem der Ansprüche 3 bis 7,
bei dem bei Wiederaufbau einer physikalischen Verkehrsbeziehung zwischen der Mobilstation (MS) und der Basisstation (BS) innerhalb einer logischen Verkehrsbeziehung keine weitere Kontextfestlegung vor dem Bereitstellen eines individuellen Kanals (TCH, FACCH) erfolgt.

9. Verfahren nach den Anspruch 8,
bei dem zusätzlich vor einem Abbau einer logischen Verkehrsbeziehung zwischen der Mobilstation (MS) und der Basisstation (BS) eine Kontextfestlegung für die folgende logische Verkehrsbeziehung zwischen der Mobilstation (MS) und dem weiteren Kommunikationsendgerät (KEG) durchgeführt wird.

10. Verfahren nach einem der vorherigen Ansprüche,
bei dem nach dem Senden eines Datenpaketes (dp) ein voreinstellbarer Zeitschalter rückgesetzt und aktiviert wird, und daß nach Ablauf der eingestellten Zeitdauer (periode) die physikalische Verkehrsbeziehung abgebaut wird.

11. Verfahren nach einen der vorhergehenden Ansprüche,
bei dem die Vorhaltzeit (TA) für die Verkehrsbeziehung zwischen Mobilstation (MS) und Basisstation (BS) unabhängig von bestehenden Verkehrsbeziehungen in periodischen Abständen bestimmt und in der Mobilstation (MS) gespeichert wird.

12. Verfahren nach einen der vorhergehenden Ansprüche,
bei dem der Verkehrsbeziehungskontext durch ein Protokoll zwischen Mobilstation (MS) und weiteren Kommunikationsendgerät (KEG) festgelegt wird.

13. Verfahren nach einen der vorhergehenden Ansprüche,
bei dem der Kontext der Verkehrsbeziehung eine priorisierte Zuweisung von Ressourcen der Luftschnittstelle für die nachfolgende Informationsübertragung der Verkehrsbeziehung vorsieht.

14. Funkstation (BS, MS) in einem GSM-Mobilfunknetz (GSM) mit Mobilstationen (MS) und Basisstationen (BS),
mit Mitteln zum Übertragen von Informationen innerhalb einer Verkehrsbeziehung über eine Luftschnittstelle zwischen einer Mobilstation (MS) und einer Basisstation (BS),
mit Mitteln zum Festlegen eines Kontexts,
**gekennzeichnet durch**, Mittel zum Steuern der Mittel zum Festlegen des Kontexts, so daß im Sinne eines beschleunigten Aufbaus der Verkehrsbeziehung die Festlegung von zumindest Teilen dieses Kontexts zwischen der Mobilstation (MS) und der Basisstation (BS) unabhängig vom Zeitpunkt des Aufbaus der Verkehrsbeziehung vor einem Abbau einer vorangehenden physikalischen Verkehrsbeziehung erfolgt.

15. Funkstation (BS, MS) nach Anspruch 14,
die als Mobilstation (MS) oder Basisstation (BS) ausgeprägt und zur Übertragung von paketierten Daten (dp) vorgesehen ist.

16. Funkstation (BS, MS) nach Anspruch 15,
wobei die Mittel zum Steuern der Mittel zum Festlegen eines Kontexts derart ausgeprägt sind, daß nach einer Verkehrsbeziehungs-Anforderungsmeldung (channel request) sofort ein individueller Kanal (TCH, FACCH) der Luftschnittstelle für die Verkehrsbeziehung zugewiesen wird.

17. Funkstation (BS, MS) nach einem der Ansprüche 14 bis 16, wobei die Mittel zum Steuern der Mittel zum Festlegen eines Kontexts derart ausgeprägt sind, daß durch eine priorisierte Zuweisung von Ressourcen der Luftschnittstelle für die nachfolgende Informationsübertragung der Kontext der Verkehrsbeziehung festgelegt wird.

## Claims

1. Method for transmitting information via a GSM mobile radio network (GSM), the transmitted information representing packetized data (dp), in which a context is defined for a traffic relationship between a mobile station (MS) and a further communications terminal (KEG) via a radio interface between the mobile station (MS) and a base station (BS) before the traffic relationship is set up,
characterized
in that, for the purposes of speeding up the setting up of the traffic relationship, at least parts of this context between the mobile station (MS) and the base station (BS) are defined independently of the time when the traffic relationship is set up before clearing down a preceding physical traffic relationship.

2. Method according to Claim 1,
in which the parts of the traffic relationship context comprise at least one of the statements relating to authenticity, encryption, coding and/or service definition.

3. Method according to one of Claims 1 or 2,
in which the context of the traffic relationship is defined by a signalling message interchange.

4. Method according to one of Claims 1 to 3,
in which an individual channel (TCH, FACCH) of the radio interface is assigned immediately after a traffic relationship request message (channel request) by the base station (BS).

5. Method according to Claim 4,
in which the individual channel is characterized as a fast associated control channel (FACCH) or as a wanted data channel (TCH).

6. Method according to one of the preceding claims,
in which a logic traffic relationship which defines the context of the traffic relationship is set up for data transmission between the mobile station (MS) and the base station (BS), physical traffic relationships using radio resources being set up only at times within the logic traffic relationship.

7. Method according to one of Claims 1 to 6,
in which at least parts of the context definition are stored beyond the clearing down of a logic traffic relationship.

8. Method according to one of Claims 3 to 7,
in which, when a physical traffic relationship is set up again between the mobile station (MS) and the base station (BS) within a logic traffic relationship, no further context definition takes place before the provision of an individual channel (TCH, FACCH).

9. Method according to Claim 8,
in which, in addition and before clearing down a logic traffic relationship between the mobile station (MS) and the base station (BS), a context definition is carried out for the following logic traffic relationship between the mobile station (MS) and the further communications terminal (KEG).

10. Method according to one of the preceding claims, in which, after the transmission of a data packet (dp), a time switch which can be preset is reset and is activated, and in which the physical traffic relationship is cleared down after the set time duration (period) has elapsed.

11. Method according to one of the preceding claims,
in which the timing advance (TA) for the traffic relationship between the mobile station (MS) and the base station (BS) is determined at periodic intervals and is stored in the mobile station (MS) independently of existing traffic relationships.

12. Method according to one of the preceding claims,
in which the traffic relationship context is defined by a protocol between the mobile station (MS) and further communications terminal (KEG).

13. Method according to one of the preceding claims,
in which the context of the traffic relationship provides a prioritized assignment of resources of the radio interface for the next information transmission in the traffic relationship.

14. Radio station (BS, MS) in a GSM mobile radio network (GSM) having mobile stations (MS) and base stations (BS),
having means for transmitting information within a traffic relationship via a radio interface between a mobile station (MS) and a base station (BS),
having means for defining a context, characterized by means for controlling the means for defining the context, so that for the purposes of speeding up the setting up of the traffic relationship, at least parts of this context between the mobile station (MS) and the base station (BS) are defined independently of the time when the traffic relationship is set up before clearing down a preceding physical traffic relationship.

15. Radio station (BS, MS) according to Claim 14,
which is characterized as a mobile station (MS) or base station (BS) and is intended for transmitting packetized data (dp).

16. Radio station (BS, MS) according to Claim 15, the means for controlling the means for defining a context being characterized in such a manner that an individual channel (TCH, FACCH) of the radio interface for the traffic relationship is assigned immediately after a traffic relationship request message (channel request).

17. Radio station (BS, MS) according to one of Claims 14 to 16,
the means for controlling the means for defining a context being characterized in such a manner that the context of the traffic relationship is defined by prioritized assignment of resources of the radio interface for the next information transmission.

## Revendications

1. Procédé de transmission d'informations par l'intermédiaire d'un réseau radio mobile du type GSM (GSM), les informations transmises représentant des données en paquets (dp),
dans lequel, pour une relation de trafic entre une station mobile (MS) et un autre terminal de communication (KEG), par l'intermédiaire d'une interface radio, on spécifie un contexte entre la station mobile (MS) et une station de base (BS) avant un établissement de la relation de trafic,
caractérisé par le fait que,
en vue d'un établissement accéléré de la relation de trafic, la spécification d'au moins certaines parties de ce contexte entre la station mobile (MS) et la station de base (BS) s'effectue indépendamment de l'instant de l'établissement de la relation de trafic avant une libération d'une relation de trafic physique précédente.

2. Procédé selon la revendication 1, dans lequel les parties du contexte de relation de trafic comprennent au moins l'une des indications portant sur l'authenticité, le chiffrage, le codage et/ou la spécification de service.

3. Procédé selon l'une des revendications 1 ou 2, dans lequel on spécifie le contexte de la relation de trafic au moyen d'un échange de messages de signalisation.

4. Procédé selon l'une des revendications 1 à 3, dans lequel, après un message de demande de relation de trafic (channel request), on attribue immédiatement un canal individuel (TCH, FACCH) de l'interface radio par la station de base (BS).

5. Procédé selon la revendication 4, dans lequel le canal individuel est marqué comme canal de contrôle associé rapide (FACCH) ou comme canal de données utiles (TCH).

6. Procédé selon l'une des revendications précédentes, dans lequel, pour la transmission entre la station mobile (MS) et la station de base (BS), on établit une relation de trafic logique spécifiant le contexte de la relation de trafic, des relations de trafic physiques utilisant des ressources techniques radio n'étant établies que temporairement à l'intérieur de la relation de trafic logique.

7. Procédé selon l'une des revendications 1 à 6, dans lequel on mémorise au moins certaines parties de la spécification de contexte au-delà de la libération d'une relation de trafic logique.

8. Procédé selon l'une des revendications 3 à 7, dans lequel, lors du rétablissement d'une relation de trafic physique entre la station mobile (MS) et la station de base (BS) à l'intérieur d'une relation de trafic logique, on n'effectue aucune autre spécification de contexte avant la mise à disposition d'un canal individuel (TCH, FACCH).

9. Procédé selon la revendication 8, dans lequel, en plus, avant une libération d'une relation de trafic logique entre la station mobile (MS) et la station de base (BS), on effectue une spécification de contexte pour la relation de trafic logique suivante entre la station mobile (MS) et l'autre terminal de communication (KEG).

10. Procédé selon l'une des revendications précédentes, dans lequel, après l'émission d'un paquet de données (dp), on réinitialise et on active un interrupteur à temps préréglable et, après l'écoulement de la durée réglée (periode), on libère la relation de trafic physique.

11. Procédé selon l'une des revendications précédentes, dans lequel on détermine à intervalles périodiques le temps d'avance (TA) pour la relation de trafic entre la station mobile (MS) et la station de base (BS) indépendamment de relations de trafic existantes et on le mémorise dans la station mobile (MS).

12. Procédé selon l'une des revendications précédentes, dans lequel le contexte de relation de trafic est spécifié par un protocole entre la station mobile (MS) et l'autre terminal de communication (KEG).

13. Procédé selon l'une des revendications précédentes, dans lequel le contexte de la relation de trafic prévoit une attribution prioritaire de ressources de l'interface radio pour la transmission d'informations suivante de la relation de trafic.

14. Station radio (BS, MS) dans un réseau radio mobile du type GSM (GSM) comportant des stations mobiles (MS) et des stations de base (BS),
avec des moyens pour transmettre des informations à l'intérieur d'une relation de trafic par l'intermédiaire d'une interface radio entre une station mobile (MS) et une station de base (BS),
avec des moyens pour spécifier un contexte,
caractérisée par
des moyens pour commander des moyens pour spécifier le contexte de telle sorte que, en vue d'un établissement accéléré de la relation de trafic, la spécification d'au moins certaines parties de ce contexte entre la station mobile (MS) et la station de base (BS) s'effectue indépendamment de l'instant de l'établissement de la relation de trafic avant une libération d'une relation de trafic physique précédente.

15. Station radio (BS, MS) selon la revendication 14, qui est marquée comme station mobile (MS) ou comme station de base (BS) et qui est prévue pour la transmission de données en paquets (dp).

16. Station radio (BS, MS) selon la revendication 15, les moyens pour commander les moyens pour spécifier un contexte étant marqués de telle sorte que, après un message de demande de relation de trafic (channel request), un canal individuel (TCH, FACCH) de l'interface radio est immédiatement attribué pour la relation de trafic.

17. Station radio (BS, MS) selon l'une des revendications 14 à 16, les moyens pour commander les moyens pour spécifier un contexte étant marqués de telle sorte que, par une attribution prioritaire de ressources de l'interface radio, le contexte de la relation de trafic est spécifié pour la transmission d'informations suivante.
